# EUROPEAN PATENT APPLICATION

(11) **EP 4 374 689 A1**
(43) Date of publication of application: **29.05.2024**
(21) Application number: 22208711.6
(22) Date of filing: 22.11.2022
(51) Int. Cl.: A01K 11/00

(54) **SYSTEM AND A METHOD FOR DISMISSING AN ANIMAL FROM AN OBJECT**

(71) Applicant: Bayerische Motoren Werke Aktiengesellschaft, 80809 München (DE)
(72) Inventor: Zaki, Tarek, 81829 München (DE)

(57) **Abstract**

A system for dismissing an animal from an object comprises:
a detection unit configured to detect the presence of an animal in the object and/or in a surrounding of the object, and
an output unit configured to output a signal towards the object and/or the surrounding of the object for dismissing the animal from the object if the detection unit detects the presence of the animal.

## Description

The present invention relates to a system and a method for dismissing an animal from an object.

Animals present in an object or a surrounding of the object may cause physical damage to the object. If, for example, the object is a vehicle, the vehicle is often parked not in closed garages, and thus exposed to the nature including the animals, in particular wild animals. Often, the animals step on the vehicle or get in the motor area. In some cases, these animals only make dirt, but in some more critical cases cause physical damage to the vehicle, for example, by damaging the glass, the antenna or even by eating up cables of the vehicle.

Systems for dismissing an animal from an object are known which continuously output a signal for protecting the object from being damaged by the animal.

An object of the present invention is to provide an improved system and an improved method for dismissing an animal from an object.

The object is achieved by the features of the independent claims. Further preferred embodiments of the invention are subject of the dependent claims.

According to a first aspect of the invention, a system for dismissing an animal from an object comprises:
a detection unit configured to detect the presence of an animal in the object and/or in a surrounding of the object, and
an output unit configured to output a signal towards the object and/or the surrounding of the object for dismissing the animal from the object if the detection unit detects the presence of the animal.

Hereby, in some embodiments, while the object is unattended by an owner of the object, physical damage caused by an animal to the object can be avoided.

In some embodiments, the object is a vehicle or a building.

The signal is only output towards the object and/or the surrounding of the object by the output unit if the detection unit detects the presence of the animal. Accordingly, the signal is not continuously output, whereby a power consumption of the system can be reduced compared to the case in which the signal is continuously output.

According to some embodiments, the system further comprises a transmission unit configured to transmit a notification notifying that the presence of an animal has been detected to a predetermined receiver unit if the detection unit detects the presence of the animal.

Hereby, in some embodiments, an owner of the object having the predetermined receiver unit can be informed about the presence of the animal such that the owner eventually can take further measures to dismiss the animal and/or check whether the object has been damaged by the animal.

The transmission unit and the predetermined receiver unit can be configured to communicate with each other wirelessly. For example, the predetermined receiver unit is a smartphone.

According to some embodiments, the detection unit comprises an image capturing unit configured to capture an image of at least a part of the object and/or the surrounding of the object, and an image processing unit configured to process the image to determine whether or not the image of the at least a part of the object and/or the surrounding of the object comprises at least a portion of an image of an animal, wherein the detection unit is configured to determine the presence of the animal if the image of the at least a part of the object and/or the surrounding of the object comprises at least a portion of an image of an animal.

In some embodiments, the image capturing device comprises one or more cameras, e.g., inner and/or outer cameras of a vehicle in case the object is a vehicle.

According to some embodiments, the system further comprises a storage unit configured to store the image of the at least a part of the object and/or the surrounding of the object if the detection unit detects the presence of the animal. In some embodiments, the storage unit can be further configured to store meta data of the image of the at least a part of the object and/or the surrounding of the object if the detection unit detects the presence of the animal, wherein the meta data may include the date and/or time of capturing the image of the at least a part of the object and/or the surrounding of the object.

Hereby, in some embodiments, the fact that an animal has caused damage to the object can be documented, wherein the corresponding image and, in some embodiments the corresponding meta data, can be transmitted to an insurance company as evidence that the damage was caused by an animal.

In some embodiments, the transmission unit may be further configured to transmit the image of the at least a part of the object and/or the surrounding of the object and, in some embodiments the corresponding meta data, to the predetermined receiver unit.

According to some embodiments, the output unit is configured to output a sound signal and/or a vibration signal and/or a light signal, in some embodiments a blue light signal, towards the object and/or the surrounding of the object for dismissing the animal from the object if the detection unit detects the presence of the animal.

Hereby, in some embodiments, even in case of a false detection of an animal, nobody is harmed by outputting the signal.

In some embodiments, e.g., if the object is a vehicle, the output unit is configured to output a vibration signal that creates subtle vibrations to a body of the object.

According to a second aspect of the invention, a method for dismissing an animal from an object comprises the steps:
detecting the presence of an animal in the object and/or in a surrounding of the object, and
outputting a signal towards the object and/or the surrounding of the object for dismissing the animal from the object if the presence of the animal is detected.

According to some embodiments, the method further comprises transmitting a notification notifying that the presence of an animal has been detected to a predetermined receiver unit if the presence of the animal is detected.

According to some embodiments, detecting the presence of the animal comprises capturing an image of at least a part of the object and/or the surrounding of the object, processing the image to determine whether or not the image of the at least a part of the object and/or the surrounding of the object comprises at least a portion of an image of an animal, and determining the presence of the animal if the image of the at least a part of the object and/or the surrounding of the object comprises at least a portion of an image of an animal.

According to some embodiments, the method further comprises storing the image of the at least a part of the object and/or the surrounding of the object if the presence of the animal is detected. In some embodiments, together with storing the image of the at least a part of the object and/or the surrounding of the object, meta data of the image can be stored if the presence of the animal is detected, wherein the meta data may include the date and/or time of capturing the image of the at least a part of the object and/or the surrounding of the object.

According to some embodiments, outputting the signal comprises outputting a sound signal and/or a vibration signal and/or a light signal, in some embodiments a blue light signal, towards the object and/or the surrounding of the object for dismissing the animal from the object if the presence of the animal is detected.

The features and advantages described with respect to the first aspect of the invention and its advantageous embodiment also apply, at least where technically useful, to the second aspect of the invention and its advantageous embodiment, and vice versa.

Further advantages and features result from the dependent claims and the embodiment examples. For this purpose shows, partially schematized:
- Fig. 1: a system for dismissing an animal from an object according to an embodiment, and
- Fig. 2: a flow chart for illustrating a method for dismissing an animal from an object according to an embodiment.

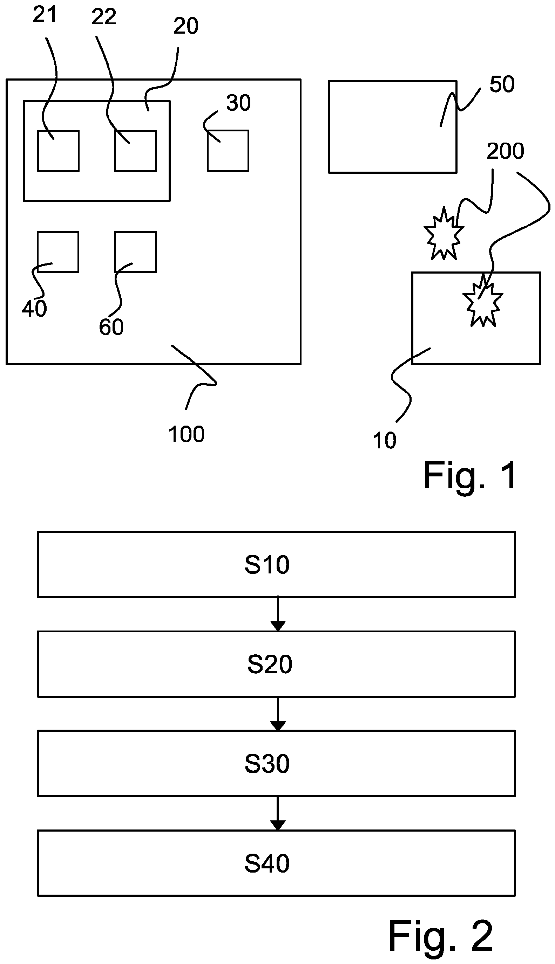

Fig. 1 shows a system for dismissing an animal from an object.

The system 100 for dismissing an animal 200 from an object 10 comprises a detection unit 20 configured to detect the presence of an animal 200 in the object 10 and/or in a surrounding of the object 10, and an output unit 30 configured to output a signal towards the object 10 and/or the surrounding of the object 10 for dismissing the animal 200 from the object 10 if the detection unit 20 detects the presence of the animal 200.

The object 10 may be a vehicle or a building. The system 100 may be included, in some embodiments integrated, in the object 10, i.e., that the system is part of the object 10, e.g., in case the object 10 is a vehicle.

The detection unit 20 comprises an image capturing unit 21, which may include one or more camera(s), configured to capture an image of at least a part of the object 10 and/or the surrounding of the object 10. Furthermore, the detection unit 20 comprises an image processing unit 22 configured to process the image captured by the image capturing unit 21 to determine whether or not the image of the at least a part of the object 10 and/or the surrounding of the object 10 comprises at least a portion of an image of an animal 200.

Here, the detection unit 20 is configured to determine the presence of the animal 200, i.e., that the animal 200 is present, if the image of the at least a part of the object 10 and/or the surrounding of the object 10 comprises at least a portion of an image of an animal 200.

The system 100 further comprises a transmission unit 40 configured to transmit a notification notifying that the presence of an animal 200 has been detected to a predetermined receiver unit 50, e.g., a predetermined receiver unit 50 such as a smartphone of an owner of the object 10, if the detection unit 20 detects the presence of the animal 200.

The system 100 further comprises a storage unit 60, i.e., a memory, configured to store the image of the at least a part of the object 10 and/or the surrounding of the object 10 if the detection unit detects 20 the presence of the animal 200. In some embodiments, the storage unit 60 can be further configured to store meta data of the image of the at least a part of the object and/or the surrounding of the object if the detection unit detects the presence of the animal, wherein the meta data may include the date and/or time of capturing the image of the at least a part of the object and/or the surrounding of the object.

The output unit 30 is configured to output a sound signal and/or a vibration signal and/or a light signal, e.g., a blue light signal, towards the object 10 and/or the surrounding of the object 10 for dismissing the animal 200 from the object 10 if the detection unit 20 detects the presence of the animal 200.

Fig. 2 shows a flow chart for illustrating a method for dismissing an animal from an object according to an embodiment.

In a step S10, the presence of an animal 200 in the object 10 and/or in a surrounding of the object 10 is detected, and in a step S20, a signal is outputted towards the object 10 and/or the surrounding of the object 10 for dismissing the animal 200 from the object 10 if the presence of the animal 200 is detected.

In some embodiments, detecting the presence of the animal 200 comprises capturing an image of at least a part of the object 10 and/or the surrounding of the object 10, processing the image to determine whether or not the image of the at least a part of the object 10 and/or the surrounding of the object 10 comprises at least a portion of an image of an animal 200, and determining the presence of the animal 200 if the image of the at least a part of the object 10 and/or the surrounding of the object comprises at least a portion of an image of an animal 200.

In some embodiments, outputting the signal comprises outputting a sound signal and/or a vibration signal and/or a light signal, in particular a blue light signal, towards the object 10 and/or the surrounding of the object 10 for dismissing the animal 200 from the object 10 if the presence of the animal 200 is detected.

In a step S30, a notification notifying that the presence of an animal 200 has been detected is transmitted to a predetermined receiver unit 50 if the presence of the animal 200 is detected.

In a step S40, the image of at least a part of the object 10 and/or the surrounding of the object 10 is stored if the presence of the animal 200 is detected. In some embodiments, together with storing the image of the at least a part of the object 10 and/or the surrounding of the object 10, meta data of the image can be stored if the presence of the animal 200 is detected, wherein the meta data may include the date and/or time of capturing the image of the at least a part of the object 10 and/or the surrounding of the object 10.

## Claims

1. System (100) for dismissing an animal (200) from an object (10), comprising:
a detection unit (20) configured to detect the presence of an animal (200) in the object (10) and/or in a surrounding of the object (10), and
an output unit (30) configured to output a signal towards the object (10) and/or the surrounding of the object (10) for dismissing the animal (200) from the object (10) if the detection unit (20) detects the presence of the animal (200).

2. System (100) according to claim 1, further comprising a transmission unit (40) configured to transmit a notification notifying that the presence of an animal (200) has been detected to a predetermined receiver unit (50) if the detection unit (20) detects the presence of the animal (200).

3. System (100) according to claim 1 or 2, wherein the detection unit (20) comprises an image capturing unit (21) configured to capture an image of at least a part of the object (10) and/or the surrounding of the object (10), and an image processing unit (22) configured to process the image to determine whether or not the image of the at least a part of the object (10) and/or the surrounding of the object (10) comprises at least a portion of an image of an animal (200), and wherein the detection unit (20) is configured to determine the presence of the animal (200) if the image of the at least a part of the object (10) and/or the surrounding of the object (10) comprises at least a portion of an image of an animal (200).

4. System (100) according to claim 3, further comprising a storage unit (60) configured to store the image of the at least a part of the object (10) and/or the surrounding of the object (10) if the detection unit detects (20) the presence of the animal (200).

5. System (100) according to one of the preceding claims, wherein the output unit (30) is configured to output a sound signal and/or a vibration signal and/or a light signal, in particular a blue light signal, towards the object (10) and/or the surrounding of the object (10) for dismissing the animal (200) from the object (10) if the detection unit (20) detects the presence of the animal (200).

6. Method for dismissing an animal (200) from an object (10), comprising the steps:
detecting the presence of an animal (200) in the object (10) and/or in a surrounding of the object (10), and
outputting a signal towards the object (10) and/or the surrounding of the object (10) for dismissing the animal (200) from the object (10) if the presence of the animal (200) is detected.

7. Method according to claim 6, further comprising transmitting a notification notifying that the presence of an animal (200) has been detected to a predetermined receiver unit (50) if the presence of the animal (200) is detected.

8. Method according to claim 6 or 7, wherein detecting the presence of the animal (200) comprises capturing an image of at least a part of the object (10) and/or the surrounding of the object (10), processing the image to determine whether or not the image of the at least a part of the object (10) and/or the surrounding of the object (10) comprises at least a portion of an image of an animal (200), and determining the presence of the animal (200) if the image of the at least a part of the object (10) and/or the surrounding of the object comprises at least a portion of an image of an animal (200).

9. Method according to claim 8, further comprising storing the image of the at least a part of the object (10) and/or the surrounding of the object (10) if the presence of the animal (200) is detected.

10. Method according to any one of claims 6 to 9, wherein outputting the signal comprises outputting a sound signal and/or a vibration signal and/or a light signal, in particular a blue light signal, towards the object (10) and/or the surrounding of the object (10) for dismissing the animal (200) from the object (10) if the presence of the animal (200) is detected.
